# EUROPÄISCHE PATENTSCHRIFT

(11) **EP 0 689 507 B1**
(45) Veröffentlichungstag und Bekanntmachung des Hinweises auf die Patenterteilung: **04.02.1998**
(21) Anmeldenummer: 94909116.9
(22) Anmeldetag: 05.03.1994
(51) Int. Cl.: B41M 5/10, C09D 11/02, C09B 67/44

(54) **FARBBÄNDER, ENTHALTEND IM IR-BEREICH ABSORBIERENDE VERBINDUNGEN**
INK RIBBONS CONTAINING COMPOUNDS ABSORBING IN THE IR REGION
RUBANS ENCRES CONTENANT DES COMPOSES ABSORBANT DANS L'INFRAROUGE

(30) Priorität: 18.03.1993 DE 4308635
(43) Veröffentlichungstag der Anmeldung: 03.01.1996
(73) Patentinhaber: BASF AKTIENGESELLSCHAFT, 67056 Ludwigshafen (DE)
(72) Erfinder: ALBERT, Bernhard, D-67133 Maxdorf (DE); KIPPER, Juergen, D-76137 Karlsruhe (DE); CLOSS, Friedrich, D-67227 Frankenthal (DE); BELLAIRE, Helmut, D-67069 Ludwigshafen (DE)
(86) Internationale Anmeldenummer: EP9400661
(87) Internationale Veröffentlichungsnummer: WO9421471

(56) Entgegenhaltungen:
- EP-A- 0 207 317
- EP-A- 0 282 181
- EP-A- 0 386 945
- EP-A- 0 553 614
- PATENT ABSTRACTS OF JAPAN vol. 15, no. 248 (C-843)(4776) 25. Juni 1991 & JP,A,03 079 683 (TOYO INK MFG CO LTD) 4. April 1991
- PATENT ABSTRACTS OF JAPAN vol. 15, no. 450 (C-885)(4978) 15. November 1991 & JP,A,03 192 171 (KYODO PRINTING CO LTD) 22. August 1991

## Beschreibung

Die vorliegende Erfindung betrifft neue Farbbänder, enthaltend eine oder mehrere Verbindungen aus der Klasse
der Phthalocyanine der Formel Ia 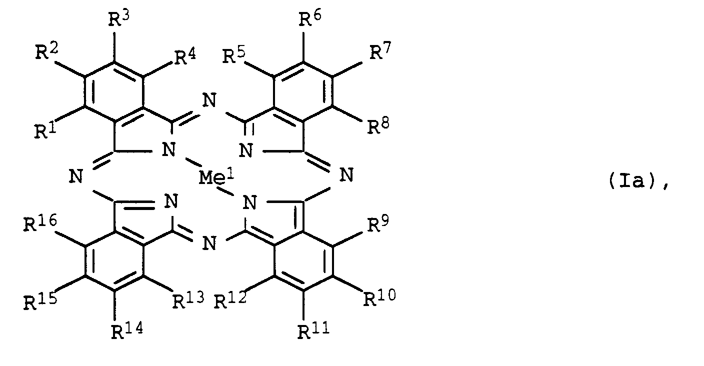 in der
Me¹ zweimal Wasserstoff, zweimal Lithium, Magnesium, Zinn, Zink, Kupfer, Mangan, Nickel, VO, TiO, AlCl oder InCl,
mindestens 4 der Reste R¹ bis R¹⁶ unabhängig voneinander einen Rest der Formel W-X¹, worin W für eine chemische Bindung, Sauerstoff, Schwefel, Imino, C₁-C₄-Alkylimino oder Phenylimino und X¹ für C₁-C₂₀-Alkyl, das gegebenenfalls durch 1 bis 4 Sauerstoffatome in Etherfunktion unterbrochen ist und durch Phenyl substituiert sein kann, C₅-C₇-Cycloalkyl oder gegebenenfalls substituiertes Phenyl stehen, und
gegebenenfalls die übrigen Reste R¹ bis R¹⁶ Wasserstoff, Halogen, Hydroxysulfonyl oder C₁-C₄-Dialkylsulfamoyl bedeuten,
der Phthalocyanine der Formel Ib 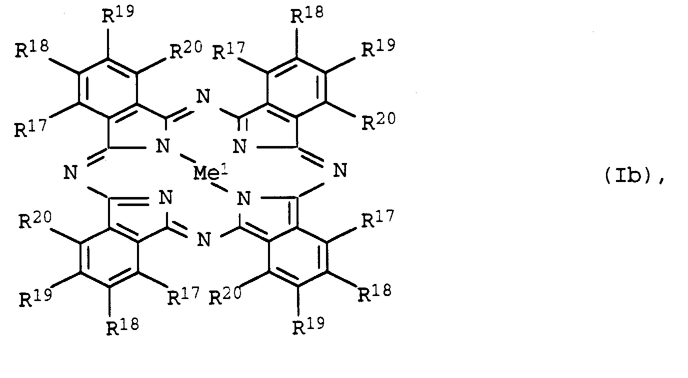 in der
R¹⁷ und R¹⁸ oder R¹⁸ und R¹⁹ oder R¹⁹ und R²⁰ zusammen jeweils einen Rest der Formel X²-C₂H₄-X³, worin einer der beiden Reste X² und X³ für Sauerstoff und der andere für Imino oder C₁-C₄-Alkylimino steht, und
R¹⁹ und R²⁰ oder R¹⁷ und R²⁰ oder R¹⁷ und R¹⁸ unabhängig voneinander jeweils Wasserstoff oder Halogen bedeuten und
Me¹ die obengenannte Bedeutung besitzt,
der Naphthalocyanine der Formel II 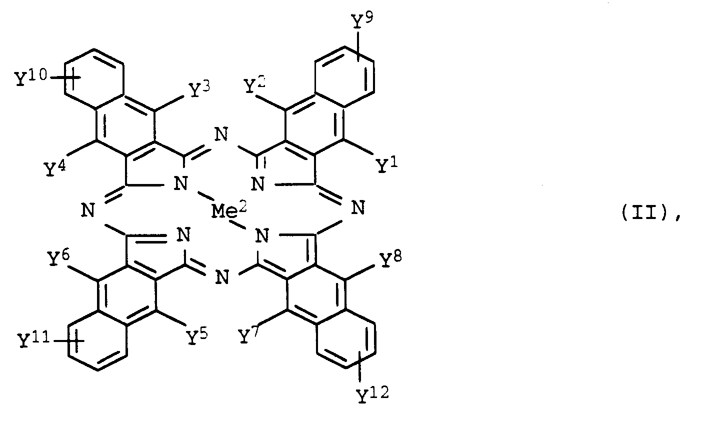 in der
Me² zweimal Wasserstoff, zweimal Lithium, Magnesium, Zink, Kupfer, Mangan, Nickel, VO, TiO, AlCl oder InCl,
Y¹, Y², Y³, Y⁴, Y⁵, Y⁶, Y⁷ und Y⁸ unabhängig voneinander jeweils Wasserstoff, Hydroxy, oder einen Rest der Formel W-X⁴, worin W für eine chemische Bindung, Sauerstoff, Schwefel, Imino, C₁-C₄-Alkylimino oder Phenylimino und X⁴ für C₁-C₂₀-Alkyl, das gegebenenfalls durch 1 bis 4 Sauerstoffatome in Etherfunktion unterbrochen ist und durch Phenyl substituiert sein kann, C₅-C₇-Cycloalkyl oder C₃-C₂₀-Alkenyl stehen, und
Y⁹, Y¹⁰, Y¹¹ und Y¹² unabhängig voneinander jeweils Wasserstoff, C₁-C₂₀-Alkyl oder C₁-C₂₀-Alkoxy, wobei die Alkylgruppen jeweils durch 1 bis 4 Sauerstoffatome in Etherfunktion unterbrochen sein können, Halogen, Hydroxysulfonyl oder C₁-C₄-Dialkylsulfamoyl bedeuten,
der Nickel-Dithiolen-Komplexe der Formel III 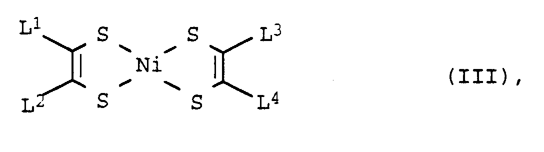 in der
L¹, L², L³ und L⁴ unabhängig voneinander jeweils C₁-C₂₀-Alkyl, das gegebenenfalls durch 1 bis 4 Sauerstoffatome in Etherfunktion unterbrochen ist, Phenyl, C₁-C₂₀-Alkylphenyl, C₁-C₂₀-Alkophenyl, wobei die Alkylgruppen jeweils durch 1 bis 4 Sauestoffatome in Etherfunktion unterbrochen sein können, oder L¹ und L² und/oder L³ und L⁴ jeweils zusammen den Rest der Formel 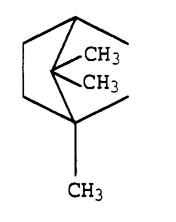 bedeuten,
der Methinfarbstoffe der Formel IV 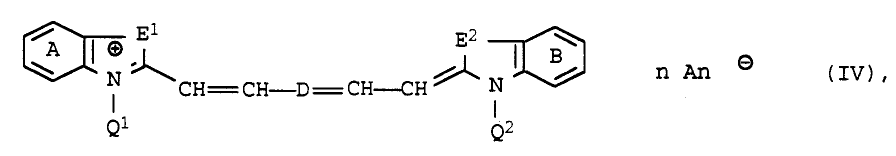 in der die Ringe A und B unabhängig voneinander jeweils gegebenenfalls benzoanelliert sind und substituiert sein können,
E¹ und E² unabhängig voneinander jeweils Sauerstoff, Schwefel, Imino oder einen Rest der Formel

―C(CH₃)₂― oder ―CH=CH― ,

D einen Rest der Formel

―CE³= oder ―CH=CE³―CH= ,

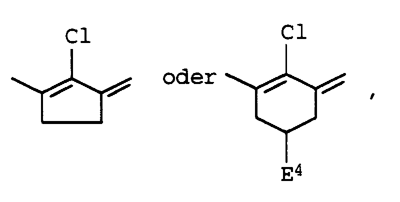

worin E³ für Wasserstoff, C₁-C₆-Alkyl, Chlor oder Brom und E⁴ für Wasserstoff oder C₁-C₆-Alkyl stehen,
Q¹ und Q² unabhängig voneinander jeweils Phenyl, C₅-C₇-Cycloalkyl oder C₁-C₁₂-Alkyl das durch 1 bis 3 Sauerstoffatome in Etherfunktion unterbrochen sein kann und gegebenenfalls durch Hydroxy, Chlor, Brom, Carboxyl, C₁-C₄-Alkoxycarbonyl, Acryloyloxy, Methacryloyloxy, Hydrorysulfonyl, C₁-C₇-Alkanoylamino, C₁-C₆-Alkylcarbamoyl, C₁-C₆-Alkylcarbamoyloxy oder einen Rest der Formel G^{⊕}(K)₃, worin G für Stickstoff oder Phosphor und K für Phenyl, C₅-C₇-CyCloalkyl oder C₁-C₁₂-Alkyl stehen, substituiert ist,
An ^{⊖} das Äquivalent eines Anions und
n 1, 2 oder 3 bedeuten,
oder der Azulenguadratsäurefarbstoffe der Formel V 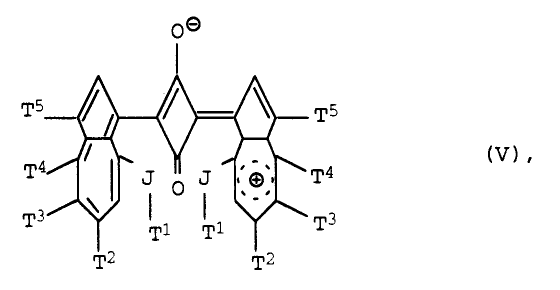 in der
J C₁-C₁₂-Alkylen,
T¹ Wasserstoff, Halogen, Amino, Hydroxy, C₁-C₁₂-Alkoxy, Phenyl, substituiertes Phenyl, carboxyl, C₁-C₁₂-Alkoxycarbonyl, Cyano oder einen Rest der Formel -NT⁷-CO-T⁶, -CO-NT⁶T⁷ oder O-CO-NT⁶T⁷, worin T⁶ und T⁷ unabhängig voneinander jeweils für Wasserstoff, C₁-C₁₂-Alkyl, C₅-C₇-Cycloalkyl, Phenyl, 2,2,6,6-Tetramethylpiperidin-4-yl oder Cyclohexylaminocarbonyl stehen, und
T², T³, T⁴ und T⁵ unabhängig voneinander jeweils Wasserstoff oder C₁-C₁₂-Alkyl, das gegebenenfalls durch Halogen, Amino, C₁-C₁₂-Alkoxy, Phenyl, substituiertes Phenyl, Carboxyl, C₁-C₁₂-Alkoxycarbonyl oder Cyano substituiert ist, bedeuten,
mit der Maßabe, daß wenn T⁵ Wasserstoff bedeutet, an einem oder beiden Azulenringen die Ringpositionen der Substituenten J-T¹ und T⁴ innerhalb eines Azulenrings auch gegeneinander vertauscht sein können,
die ihr Absorptionsmaximum jeweils im Bereich von 700 bis 1 200 nm aufweisen.

Mit Hilfe moderner Geräte der Kommunikationstechnik gewinnt das sichere und schnelle Erfassen von Informationen eine immer stärkere Bedeutung. Dabei kommt eine besondere Rolle dem automatischen, digitalen Einlesen von Information zu, die gedruckt, digital oder analog vorliegt. Als Beispiel dienen gedruckte Barcodes, die mit geeigneten Lichtquellen und Detektoren abgetastet und gelesen werden können.

So werden handelsübliche Farbbänder dazu verwendet, um maschinenlesbare Barcodes zu drucken. Durch Zusatzstoffe, wie Ruß, spezielle Pigmente oder Metallpulver, ist es zudem möglich, sichtbare Barcodes auch mit Licht, das eine Wellenlänge oberhalb des sichtbaren Bereichs aufweist, auszulesen.

Beispielsweise werden in der DE-A-3 826 734 Farbmittel für das Ink-Jet-Verfahren beschrieben, die sowohl im sichtbaren als auch im infraroten Bereich ausgelesen werden können.

Außerdem sind aus der JP-A-251 578/1991 Metallkomplexe bekannt, mit denen sich Tinten auf Ölbasis herstellen lassen, die im nahen IR-Bereich absorbieren.

Allerdings zeigen praktisch alle Drucke, die mit solchen Farbmitteln erstellt wurden, eine starke Absorption im Sichtbaren.

Aus der DE-C-4 022 822 ist weiterhin die Anwendung von Siliciumnaphthalocyanin zur Erzeugung IR-lesbarer Drucke bekannt.

Aufgabe der vorliegenden Erfindung war es nun, neue Farbbänder bereitzustellen, wobei die mit diesen Farbbändern erzeugten Drucke im nahen Infrarot eine ausreichend starke Absorption aufweisen sollten, so daß ein Auslesen mit geeigneten Barcode-Lesegeräten ermöglicht wird. Dagegen sollte sie im Sichtbaren keine oder nur eine geringe Absorption aufweisen.

Demgemäß wurden die eingangs naher bezeichneten Farbbänder gefunden.

Von besonderem Interesse sind dabei Naphthalocyanine der Formel II, in der mindestens einer der Reste Y¹ bis Y⁸ von Wasserstoff verschieden sind.

Alle in den obengenannten Formeln auftretenden Alkyl- oder Alkylenreste können sowohl geradkettig als auch verzweigt sein.

In Formel Ia, II oder III sind geeignete C₁-C₂₀-Alkylreste, die gegebenenfalls durch 1 bis 4 Sauerstoffatome in Etherfunktion unterbrochen sind, z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen BeZeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Nonadecyl, Eicosyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl oder 3,6,9,12-Tetraoxatetradecyl.

In Formel I oder II ist geeignetes C₁-C₂₀-Alkyl, das durch Phenyl substituiert ist, z.B. Benzyl oder 1- oder 2-Phenylethyl.

C₅-C₇-Cycloalkyl in Formel Ia oder II ist z.B. Cyclopentyl, Cyclohexyl, Methylcyclohexyl oder Cycloheptyl.

In Formel III sind geeignete C₁-C₂₀-Alkoxyreste, die gegebenenfalls durch 1 bis 4 Sauerstoffatome in Etherfunktion unterbrochen sind, z.B. Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, Isononyloxy, Decyloxy, Isodecyloxy, Undecyloxy, Dodecyloxy, Tridecyloxy, Isotridecyloxy, Tetradecyloxy, Pentadecyloxy, Hexadecyloxy, Heptadecyloxy, Octadecyloxy, Nonadecyloxy, Eicosyloxy, 2-Methoxyethoxy, 2-Ethoxyethoxy, 2-Propoxyethoxy, 2-Isopropoxyethoxy, 2-Butoxyethoxy, 2- oder 3-Methoxypropoxy, 2- oder 3-Ethoxypropoxy, 2- oder 3- Propoxypropoxy, 2- oder 3-Butoxypropoxy, 2- oder 4-Methoxybutoxy, 2- oder 4-Ethoxybutoxy, 2- oder 4-Propoxybutoxy, 2- oder 4-Butoxybutoxy, 3,6-Dioxaheptyloxy, 3,6-Dioxaoctyloxy, 4,8-Dioxanonyloxy, 3,7-Dioxaoctyloxy, 3,7-Dioxanonyloxy, 4,7-Dioxaoctyloxy, 4,7-Dioxanonyloxy, 4,8-Dioxadecyloxy, 3,6,8-Trioxadecyloxy, 3,6,9-Trioxaundecyloxy, 3,6,9,12-Tetraoxatridecyloxy oder 3,6,9,12-Tetraoxatetradecyloxy.

In Formel II ist geeignetes C₃-C₂₀-Alkenyl z.B. Prop-2-en-1-yl, Butenyl, But-3-en-1-yl, Pentenyl, Pent-4-en-1-yl, 3-Methylbut-3-en-1-yl, Hexenyl, Heptenyl, Octenyl, Nonenyl, Decenyl, Undecenyl, Undec-10-en-1-yl, Dodecenyl, Tridecenyl, Tetradecenyl, Pentadecenyl, Hexedecenyl, Heptadecenyl, Octadecenyl, Nonadecenyl oder Eicosenyl.

In Formel Ia, III oder V ist geeignetes substituiertes Phenyl z.B. durch C₁-C₆-Alkyl, C₁-C₆-Alkoxy, Hydroxy oder Halogen substituiertes Phenyl. In der Regel können dabei 1 bis 3 Substituenten auftreten.

Halogen in Formel Ib, II oder V ist z.B. Fluor, Chlor oder Brom.

Reste W in Formel Ia oder II sowie X² oder X³ in Formel Ib sind z.B. Methylimino, Ethylimino, Propylimino, Isopropylimino oder Butylimino.

Reste R¹ bis R¹⁶ in Formel Ia sowie Y⁹ bis Y¹² in Formel II sind z.B. Dimethylsulfamoyl, Diethylsulfamoyl, Dipropylsulfamoyl, Dibutylsulfamoyl oder N-Methyl-N-ethylsulfamoyl.

Wenn die Ringe A und/oder B in Formel IV substituiert sind, so können als Substituenten z.B. C₁-C₆-Alkyl, Phenyl-C₁-C₆-alkoxy, Phenoxy, Halogen, Hydroxy, Amino, C₁-C₆-Mono- oder Dialkylamino oder Cyano in Betracht kommen. Die Ringe sind dabei in der Regel ein bis dreifach substituiert.

Reste E³, E⁴, Q¹ und Q² in Formel IV sind z.B. Methyl, Ethyl, Propyl, Isopropyl, Butyl, Isobutyl, sec-Butyl, Pentyl, Isopentyl, Neopentyl, tert-Pentyl oder Hexyl.

Reste Q¹ und Q² sind weiterhin z.B. Hexyl, 2-Methylpentyl, Heptyl, Octyl, 2-Ethylhexyl, Isooctyl, Nonyl, Isononyl, Decyl, Isodecyl, Undecyl, Dodecyl, Cyclopentyl, Cyclohexyl, 2-Methoxyethyl, 2-Ethoxyethyl, 2- oder 3-Methoxypropyl, 2- oder 3-Ethoxypropyl, 2-Hydroxyethyl, 2- oder 3-Hydroxypropyl, 2-Chlorethyl, 2-Bromethyl, 2- oder 3-Chlorpropyl, 2- oder 3-Brompropyl, 2-Carboxyethyl, 2- oder 3-Carboxypropyl, 2-Methoxycarbonylethyl, 2-Ethoxycarbonylethyl, 2- oder 3-Methoxycarbonylpropyl, 2- oder 3-Ethoxycarbonylpropyl, 2-Acryloyloxyethyl, 2- oder 3-Acryloyloxypropyl, 2-Methacryloyloxyethyl, 2- oder 3-Methacryloyloxypropyl, 2-Hydroxysulfonylethyl, 2- oder 3-Hydroxysulfonylpropyl, 2-Acetylaminoethyl, 2- oder 3-Acetylaminopropyl, 2-Methylcarbamoylethyl, 2-Ethylcarbamoylethyl, 2- oder 3-Methylcarbamoylpropyl, 2- oder 3-Ethylcarbamoylpropyl, 2-Methylcarbamoyloxyethyl, 2-Ethylcarbamoyloxyethyl, 2- oder 3-Methylcarbamoyloxypropyl, 2- oder 3-Ethylcarbamoyloxypropyl, 2-(Trimethylammonium)ethyl, 2-(Triethylammonium)ethyl, 2- oder 3-(Trimethylammonium)propyl, 2- oder 3-(Triethylammonium)propyl, 2-(Triphenylphosphonium)ethyl oder 2- oder 3-(Triphenylphosphonium)propyl.

An^{⊖} in Formel IV leitet sich z.B. von Anionen organischer oder anorganische Säuren ab. Besonders bevorzugt sind dabei z.B. Methansulfonat, 2- oder 4-Methylbenzolsulfonat, Acetat, Trifluoroacetat, Heptafluorobutyrat, Chlorid, Bromid, Iodid, Perchlorat, Tetrafluoroborat, Nitrat, Hexafluorophosphat oder Tetraphenylborat.

Weiterhin können als anorganische Anionen auch die Anionen von Heteropolysäuren, z.B. des Phosphors oder des Siliciums, verwendet werden. Als Beispiele seien genannt: Molybdatophosphorsäure, Molybdatokieselsäure, Vanadatophosphorsäure, Vanadatokieselsäure, Wolframatophosphorsäure, Wolframatokieselsäure oder Mischsäuren dieser Art.

Reste J in Formel V sind z.B. Methylen, Ethylen, 1,2- oder 1,3-Propylen, 1,2-, 1,3-, 2,3- oder 1,4-Butylen, Pentamethylen, Hexamethylen, Heptamethylen, Octamethylen, Nonamethylen, Decamethylen, Undecamethylen oder Dodecamethylen.

Reste T², T³, T⁴ und T⁵ in Formel V sind beispielsweise Methyl, Ethyl, Propyl, Isopropyl, Butyl, Isobutyl, sec-Butyl, tert-Butyl, Pentyl, Isopentyl, Neopentyl, tert-Pentyl, 2-Methylbutyl, Hexyl, 2-Methylpentyl, Heptyl, Octyl, 2-Ethylhexyl, Isooctyl, Nonyl, Isononyl, Decyl, Undecyl, Dodecyl, Fluormethyl, Chlormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl, Cyanomethyl, 2-Cyanoethyl, 3-Cyanopropyl, 2-Cyanobutyl, 4-Cyanobutyl, 5-Cyanopentyl, 6-Cyanohexyl, 2-Aminoethyl, 2-Aminopropyl, 3-Aminopropyl, 2-Aminobutyl, 4-Aminobutyl, 5-Aminopentyl, 6-Aminohexyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 2-Methoxyethyl, 2-Ethoxyethyl, 2-Propoxyethyl, 2-Isopropoxyethyl, 2-Butoxyethyl, 2-Methoxypropyl, 2-Ethoxypropyl, 3-Ethoxypropyl, 4-Ethoxybutyl, 4-Isopropoxybutyl, 5-Ethoxypentyl, 6-Methoxyhexyl, Benzyl, 1-Phenylethyl, 2-Phenylethyl, 4-Chlorbenzyl, 4-Methoxybenzyl, 2-(4-Methylphenyl)ethyl, Carboxymethyl, 2-Carboxyethyl, 3-Carboxypropyl, 4-Carboxybutyl, 5-Carboxypentyl, 6-Carboxyhexyl, Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl oder 6-Ethoxycarbonylhexyl.

T¹ in Formel V ist z.B. Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Pentyloxycarbonyl, Isopentyloxycarbonyl, Neopentyloxycarbonyl, tert-Pentyloxycarbonyl, Hexyloxycarbonyl, Heptyloxycarbonyl, Octyloxycarbonyl, Isooctyloxycarbonyl, Nonyloxycarbonyl, Isononyloxycarbonyl, Decyloxycarbonyl, Isodecyloxycarbonyl, Undecyloxycarbonyl, Dodecyloxycarbonyl, Methoxy, Ethoxy, Propoxy, Isopropoxy, Butoxy, Isobutoxy, Pentyloxy, Hexyloxy, Acetylamino, Carbamoyl, Mono- oder Dimethylcarbamoyl, Mono- oder Diethylcarbamoyl, Monocyclohexylcarbonyl, Phenylcarbamoyl, Dimethylcarbamoyloxy oder Diethyl- carbamoyloxy.

Bevorzugt sind Farbänder, enthaltend eine oder mehrere Verbindungen, die aus der Klasse der Naphthalocyanine oder Nickel-Dithiolen-Komplexe stammen, wobei die Verbindungen aus der Klasse der Naphthalocyanine besonders zu nennen sind.

Hervorzuheben sind Farbbänder, enthaltend eines oder mehrere der Naphthalocyanine der Formel IIa 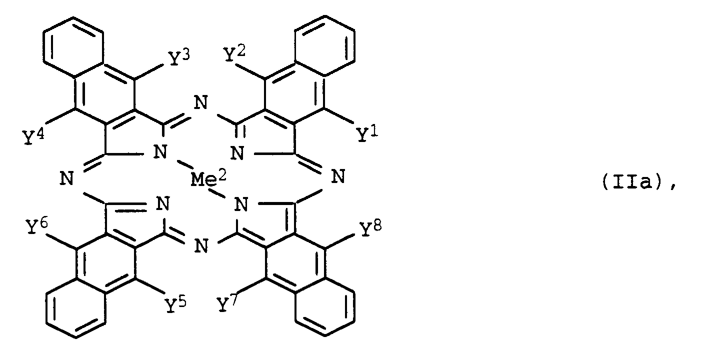 in der
Y¹, Y², Y³, Y⁴, Y⁵, Y⁶, Y⁷ und Y⁸ unabhängig voneinander jeweils Wasserstoff, Hydroxy, C₁-C₄-Alkyl oder C₁-C₂₀-Alkoxy und
Me² zweimal Wasserstoff, zweimal Lithium, Magnesium, Zink, Kupfer, Nickel, VO oder AlCl bedeuten.

Besonders hervorzuheben sind Farbbänder, die eines oder mehrere Naphthalocyanine der Formel IIa enthalten, in der Y¹, Y², Y³, Y⁴, Y⁵, Y⁶, Y⁷ und Y⁸ unabhängig voneinander jeweils Hydroxy, C₁-C₂₀-Alkoxy, insbesondere C₁-C₁₀-Alkoxy bedeuten. Die Alkoxyreste können dabei gleich oder verschieden sein.

Besonders hervorzuheben sind weiterhin Farbbänder, die eines oder mehrere Naphthalocyanine der Formel IIa enthalten, in der Me² zweimal Wasserstoff bedeutet.

Hervorzuheben sind weiterhin Farbbänder, die einen oder mehrere Nickel-Dithiolen-Komplexe der Formel III enthalten, in der L¹, L², L³ und L⁴ unabhängig voneinander jeweils Phenyl, C₁-C₂₀-Alkylphenyl, C₁-C₂₀-Alkoxyphenyl oder durch Hydroxy und C₁-C₂₀-Alkyl substituiertes Phenyl oder L¹ und L² sowie L³ und L⁴ jeweils zusammen den Rest der Formel 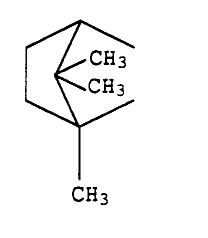 bedeuten.

Besonders hervorzuheben sind weiterhin Farbbänder, die einen oder mehrere Nickel-Dithiolen-Komplexe der Formel III enthalten, in der L¹ und L⁴ jeweils Phenyl und L² und L⁴ jeweils einen Rest der Formel 4-[C₂H₅-C(CH₃)₂]-C₆H₄ bedeuten.

Die Phthalocyanine der Formel Ia sind an sich bekannt und z.B. in DE-B-1 073 739 oder EP-A-155 780 beschrieben oder können nach an sich bekannten Methoden, wie sie bei der Herstellung von Phthalocyaninen oder Naphthalocyaninen zur Anwendung kommen und wie sie beispielsweise in F.H. Moser, A.L. Thomas "The Phthalocyanines", CRC Press, Boca Rota, Florida, 1983, oder J. Am. Chem. Soc. Band 106, Seiten 7404 bis 7410, 1984, beschrieben sind, erhalten werden. Die Phthalocyanine der Formel Ib sind ebenfalls an sich bekannt und z.B. in EP-A-155 780 beschrieben oder können gemäß den Methoden des obengenannten Standes der Technik (Moser, J.Am. Chem.Soc.) erhalten werden.

Die Naphthalocyanine der Formel II sind ebenfalls an sich bekannt und beispielsweise in der GB-A-2 168 372 oder GB-A-2 200 650 beschrieben oder können gemäß den Methoden des obengenannten Standes der Technik (Moser, J.Am. Chem.Soc.) erhalten werden.

Die Nickel-Dithiolen-Komplexe der Formel III sind ebenfalls an sich bekannt und beispielsweise in der EP-A-192 215 beschrieben.

Die Methinfarbstoffe der Formel IV sind ebenfalls an sich bekannt und z.B. in der EP-A-464 543 beschrieben oder können gemäß den dort genannten Methoden erhalten werden.

Die Azulenquadratsäurefarbstoffe der Formel V sind ebenfalls an sich bekannt und z.B. in der EP-A-310 080 oder US-A-4 990 649 beschrieben oder können gemäß den dort genannten Methoden erhalten werden.

Bei der Herstellung der erfindungsgemäßen Farbbänder werden die obengenannten Verbindungen in Form von flüssigen Präparationen angewandt.

Diese Präparationen enthalten die obengenannten Verbindungen sowie als Lösungsmittel mindestens ein Produkt, ausgewählt aus der Gruppe, bestehend aus Olein, Phthalsäure-C₄-C₁₃-dialkylestern, C₁-C₃₀-Chloralkanen, C₁-C₂₀-Diphenylalkanen, C₁-C₁₀-Dialkylnaphthalinen und teilhydriertem Terphenyl.

Olein im erfindungsgemäßen Sinne bezeichnet technische Ölsäure, wie sie bei der Fettspaltung entsteht. Sie kann noch geringe mengen an Stearinsäure, Palmitinsäure und anderen Fettsäuren enthalten.

Als Lösungsmittel für die Präparationen kommen z.B. Olein, Phthalsäure-C₄-C₁₃-dialkylester, wie Dibutylphthalat, Diisobutylphthalat, Di-sec-butylphthalat, Dipentylphthalat, Diisopentylphthalat, Dihexylphthalat, Diheptylphthalat, Dioctylphthalat, Diisooctylphthalat, Bis(2-ethyl-hexyl)phthalat, Dinonylphthalat, Diisononylphthalat, Didecylphthalat, Diisodecylphthalat, Diundecylphthalat, Didocylphthalat, Ditridecylphthalat oder Diisotridecylphthalat, C₅-C₃₀-Chloralkane, wie Chloreicosan oder Chlortetracosan, C₁-C₂₀-Diphenylalkane, wie Diphenyldecan oder Diphenyltetradecan, C₁-C₁₀-Dialkylnaphthaline, wie Diisopropylnaphthalin, teilhydriertes Terphenyl, wie Verbindungen der Formel 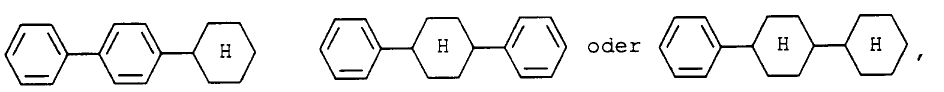 oder Mischungen dieser Lösungsmittel in Betracht.

Bevorzugt verwendet man flüssige Präparationen, enthaltend 20 bis 80 Gew.-%, vorzugsweise 30 bis 70 und insbesondere 40 bis 60 Gew.-%, jeweils bezogen auf das Gewicht der Präparation, einer oder mehrere der obengenannten, im IR-Bereich absorbierenden Verbindungen.

Weiterhin verwendet man bevorzugt flüssige Präparationen, enthaltend als Lösungsmittel mindestens ein Produkt, ausgewählt aus der Gruppe, bestehend aus Benzylalkohol, 2-Phenoxyethanol, Olein, Phthalsäure-C₈-dialkylester und Diisopropylnaphthalin.

Zur Herstellung der flüssigen Präparationen werden ein oder mehrere der im IR-Bereich absorbierenden Verbindungen in der obengenannten Konzentration in einem oder mehrerer der obengenannten Lösungsmittel gelöst.

Die Herstellung von Farbbändern ist an sich bekannt aus beispielsweise in Coating 1972, Seiten 72 und 73 sowie 213 und 214, beschrieben.

So wird zur Herstellung eines Farbbands beispielsweise die oben näher beschriebene flüssige Präparation noch mit Mineralölen, nicht trocknenden, tierischen oder pflanzlichen Ölen, wie Klauenöl, Knochenöl, Rüböl, Erdnußöl, Spermöl, Rizinusöl, Rapsöl oder Schweineschmalz, und gegebenenfalls Olein und weiteren Hilfsmitteln, z.B. Weichmacher, wie Dioctylphthalat, in einer Kugelmühle, Perlmühle oder in einem Dreiwalzwerk vermahlen und auf ein Basisgewebe aus Baumwolle, Naturseide oder Polyamid gebracht.

Die erfindungsgemäßen Farbbänder enthalten in der Regel, jeweils bezogen auf 1 m² Farbband, 3 bis 40 g, vorzugsweise 5 bis 30 g und insbesondere 10 bis 20 g im IR-Bereich absorbierende Verbindungen, wobei solche Farbbänder, die 14 bis 18 g im IR-Bereich absorbierende Verbindungen pro m² Farbband aufweisen, besonders hervorzuheben sind.

Die neuen Farbbänder eignen sich vorteilhaft zur Herstellung von mittels IR-Strahlung lesbaren Schriften oder Codierungen, wobei diese Schriften oder Codierungen trotz ihrer geringen Sichtbarkeit eine hohe Absorption im IR-Bereich aufweisen.

Die folgenden Beispiele sollen die Erfindung näher erläutern.

Allgemeine Herstellvorschrift für ein Farbband.
A) 5 g einer im IR-Bereich absorbierenden Verbindung werden bei 80°C in einer Mischung aus 25 g Olein und 25 g Diisopropylnaphthalin gelöst. Mit der resultierenden Präparation wird dann ein Baumwollgewebe getränkt.
B) 10 g einer im IR-Bereich absorbierenden Verbindung werden bei 90°C in einer Mischung aus 40 g Olein, 40 g Mineralöl und 10 g Dioctylphthalat gelöst. Die resultierende Präparation wird dann auf ein Baumwollgewebe gedruckt.

Folgende Verbindungen wurden verwendet. Man erhält dabei praktisch farblose Drucke, die eine hohe Absorption im IR-Bereich aufweisen.

### Verbindungen 1 und 2

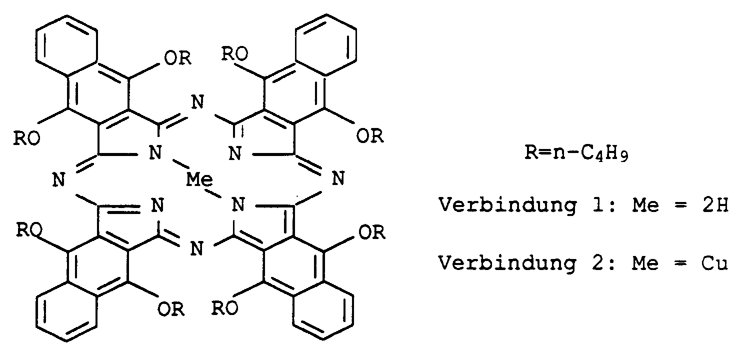

### Verbindung 3

Hexadecaphenylthio-kupferphthalocyanin

### Verbindung 4

Tetradecaphenylthio-kupferphthalocyanin

### Verbindung 5

Tetradecadodecylthio-kupferphthalocyanin

### Verbindungen 6 und 7

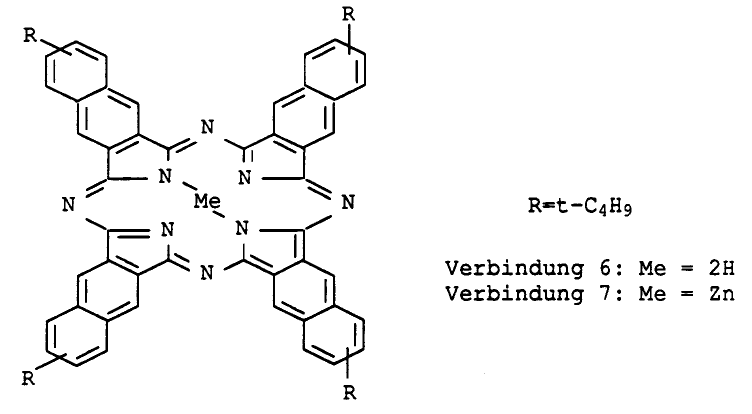

### Verbindung 8

Hexadeca(4-tert-butylphenylthio)-kupferphthalocyanin

### Verbindungen 9 bis 13

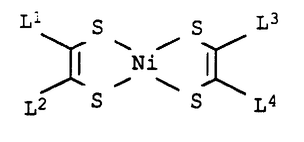

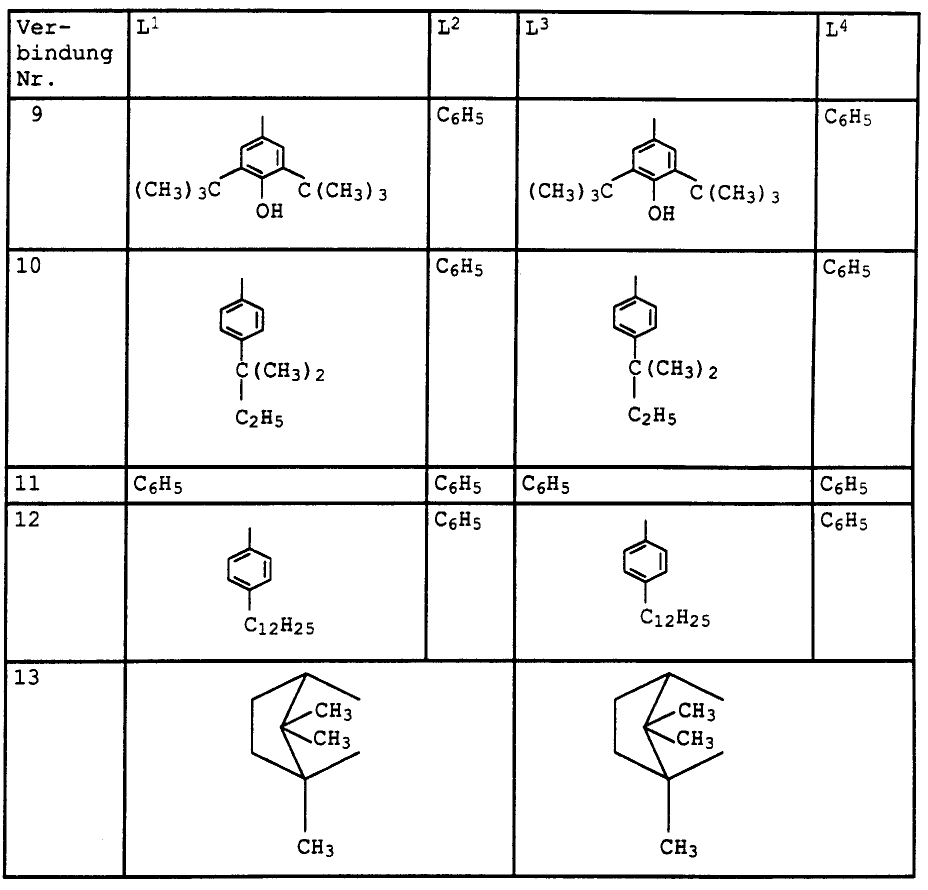

### Verbindungen 14 bis 18

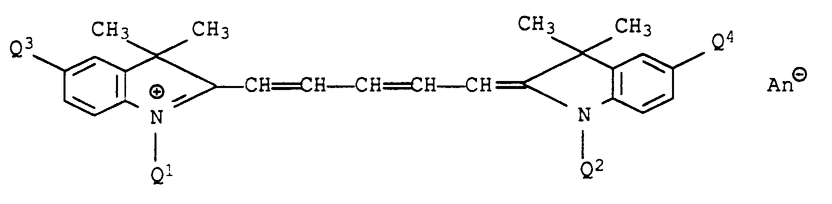

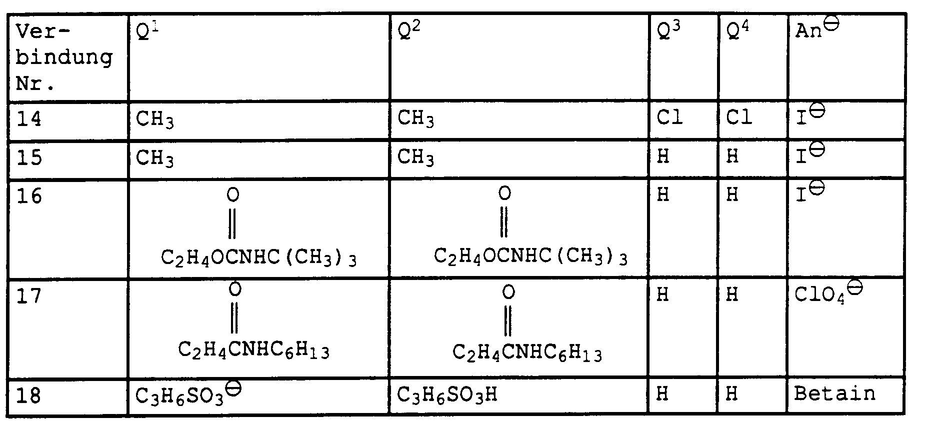

### Verbindung Nr. 19

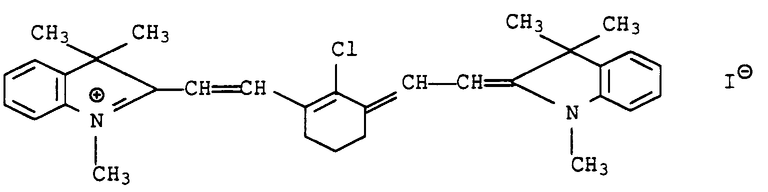

## Patentansprüche

1. Farbbänder, enthaltend eine oder mehrere Verbindungen aus der Klasse
der Phthalocyanine der Formel Ia 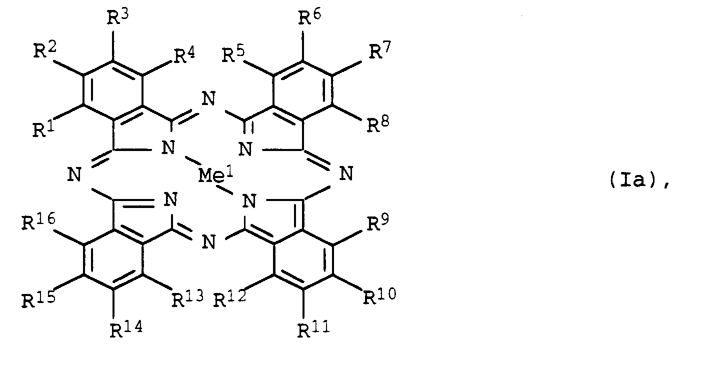 in der
Me¹ zweimal Wasserstoff, zweimal Lithium, Magnesium, Zinn, Zink, Kupfer, Mangan, Nickel, VO, TiO, AlCl oder InCl,
mindestens 4 der Reste R¹ bis R¹⁶ unabhängig voneinander einen Rest der Formel W-X¹, worin W für eine chemische Bindung, Sauerstoff, Schwefel, Imino, C₁-C₄-Alkylimino oder Phenylimino und X¹ für C₁-C₂₀-Alkyl, das gegebenenfalls durch 1 bis 4 Sauerstoffatome in Etherfunktion unterbrochen ist und durch Phenyl substituiert sein kann, C₅-C₇-Cycloakyl oder gegebenenfalls substituiertes Phenyl stehen, und
gegebenenfalls die übrigen Reste R¹ bis R¹⁶ Wasserstoff, Halogen, Hydroxysulfonyl oder C₁-C₄-Dialkylsulfamoyl bedeuten,
der Phthalocyanine der Formel Ib 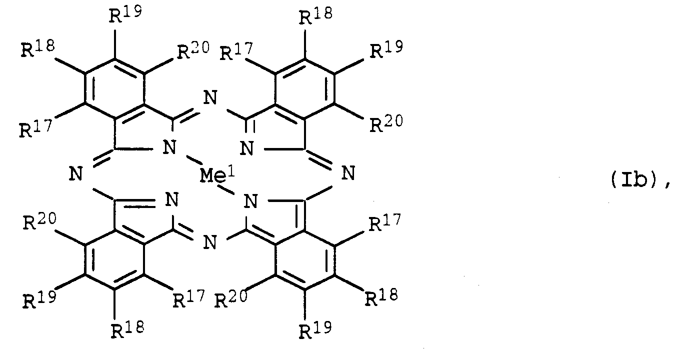 in der
R¹⁷ und R¹⁸ oder R¹⁸ und R¹⁹ oder R¹⁹ und R²⁰ zusammen jeweils einen Rest der Formel X²-C₂H₄-X³, worin einer der beiden Reste X² und X³ für Sauerstoff und der andere für Imino oder C₁-C₄-Alkylimino steht, und
R¹⁹ und R²⁰ oder R¹⁷ und R²⁰ oder R¹⁷ und R¹⁸ unabhängig voneinander jeweils Wasserstoff oder Halogen bedeuten und
Me¹ die obengenannte Bedeutung besitzt,
der Naphthalocyanine der Formel II 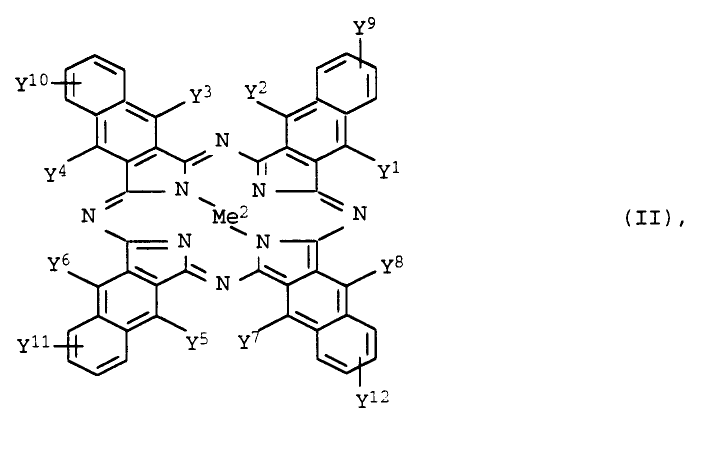 in der
Me² zweimal Wasserstoff, zweimal Lithium, Magnesium, Zink, Kupfer, Mangan, Nickel, VO, TiO, AlCl oder InCl,
Y¹, Y², Y³, Y⁴, Y⁵, Y⁶, Y⁷ und Y⁸ unabhängig voneinander jeweils Wasserstoff, Hydroxy, oder einen Rest der Formel W-X⁴, worin W für eine chemische Bindung, Sauerstoff, Schwefel, Imino, C₁-C₄-Alylimino oder Phenylimino und X⁴ für C₁-C₂₀-Alkyl, das gegebenenfalls durch 1 bis 4 Sauerstoffatome in Etherfunktion unterbrochen ist und durch Phenyl substituiert sein kann, C₅-C₇-Cycloalkyl oder C₃-C₂₀-Alkenyl stehen, und
Y⁹, Y¹⁰, Y¹¹ und Y¹² unabhängig voneinander jeweils Wasserstoff, C₁-C₂₀-Alkyl oder C₁-C₂₀-Alkoxy, wobei die Alkylgruppen jeweils durch 1 bis 4 Sauerstoffatome in Etherfunktion unterbrochen sein können, Halogen, Hydroxysulfonyl oder C₁-C₄-Dialkylsulfamoyl bedeuten,
der Nickel-Dithiolen-Komplexe der Formel III 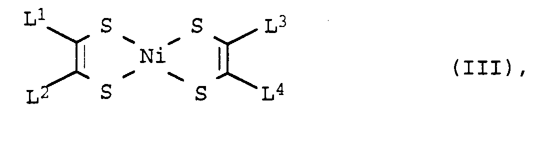 in der
L¹, L², L³ und L⁴ unabhängig voneinander jeweils C₁-C₂₀-Alkyl, das gegebenenfalls durch 1 bis 4 Sauerstoffatome in Etherfunktion unterbrochen ist, Phenyl, C₁-C₂₀-Alkylphenyl, C₁-C₂₀-Alkoxyphenyl, wobei die Alkylgruppen jeweils durch 1 bis 4 Sauestoffatome in Etherfunktion unterbrochen sein können, oder L¹ und L² und/oder L³ und L⁴ jeweils zusammen den Rest der Formel 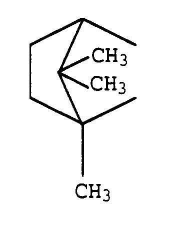 bedeuten,
der Methinfarbstoffe der Formel IV 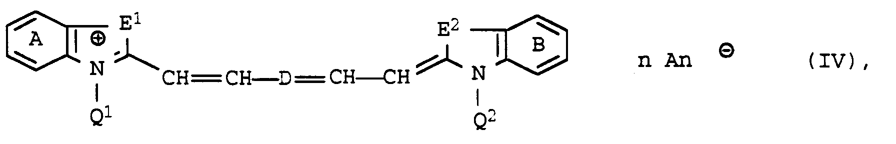 in der die Ringe A und B unabhängig voneinander jeweils gegebenenfalls benzoanelliert sind und substituiert sein können,
E¹ und E² unabhängig voneinander jeweils Sauerstoff, Schwefel, Imino oder einen Rest der Formel
―C(CH₃)₂― oder ―CH=CH― ,
D einen Rest der Formel
―CE³= oder ―CH=CE³―CH= , 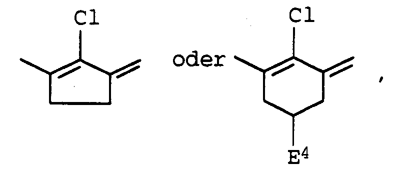
worin E³ für Wasserstoff, C₁-C₆-Alkyl, Chlor oder Brom und E⁴ für Wasserstoff oder C₁-C₆-Alkyl stehen,
Q¹ und Q² unabhängig voneinander jeweils Phenyl, C₅-C₇-cycloalkyl oder C₁-C₁₂-Alkyl das durch 1 bis 3 Sauerstoffatome in Etherfunktion unterbrochen sein kann und gegebenenfalls durch Hydroxy, Chlor, Brom, Carboxyl, C₁-C₄-Alkoxycarbonyl, Acryloyloxy, Methacryloyloxy, Hydroxysulfonyl, C₁-C₇-Alkanoylamino, C₁-C₆-Alkylcarbamoyl, C₁-C₆-Alkylcarbamoyloxy oder einen Rest der Formel G^{⊕}(K)₃, worin G für Stickstoff oder Phosphor und K für Phenyl, C₅-C₇-Cycloalkyl oder C₁-C₁₂-Alkyl stehen, substituiert ist,
An ^{⊖} das Äquivalent eines Anions und
n 1, 2 oder 3 bedeuten,
oder der Azulenquadratsäurefarbstoffe der Formel V 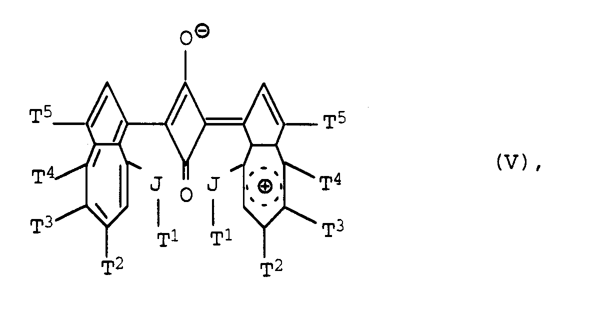 in der
J C₁-C₁₂-Alkylen,
T¹ Wasserstoff, Halogen, Amino, Hydroxy, C₁-C₁₂-Alkoxy, Phenyl, substituiertes Phenyl, Carboxyl, C₁-C₁₂-Alkoxycarbonyl, Cyano oder einen Rest der Formel -NT⁷-CO-T⁶, -CO-NT⁶T⁷ oder O-CO-NT⁶T⁷, worin T⁶ und T⁷ unabhängig voneinander jeweils für Wasserstoff, C₁-C₁₂-Alkyl, C₅-C₇-Cycloalkyl, Phenyl, 2,2,6,6-Tetramethylpiperidin-4-yl oder Cyclohexylaminocarbonyl stehen, und
T², T³, T⁴ und T⁵ unabhängig voneinander jeweils Wasserstoff oder C₁-C₁₂-Alkyl, das gegebenenfalls durch Halogen, Amino, C₁-C₁₂-Alkoxy, Phenyl, substituiertes Phenyl, Carboxyl, C₁-C₁₂-Alkoxycarbonyl oder Cyano substituiert ist, bedeuten,
mit der Maßgabe, daß wenn T⁵ Wasserstoff bedeutet, an einem oder beiden Azulenringen die Ringpositionen der Substituenten J-T¹ und T⁴ innerhalb eines Azulenrings auch gegeneinander vertauscht sein können,
die ihr Absorptionsmaximum jeweils im Bereich von 700 bis 1 200 nm aufweisen.

2. Farbbänder nach Anspruch 1, enthaltend eine oder mehrere Verbindungen aus der Klasse der Naphthalocyanine oder der Nickel-Dithiolen-Komplexe.

3. Farbbänder nach Anspruch 1, enthaltend eine oder mehrere in Anspruch 1 genannten Verbindungen sowie als Lösungsmittel mindestens ein Produkt, ausgewählt aus der Gruppe, bestehend aus Olein, Phthalsäure-C₄-C₁₃-dialkylestern, C₁-C₃₀-Chloralkanen, C₁-C₂₀-Diphenylalkanen, C₁-C₁₀-Dialkylnaphthalinen und teilhydriertem Terphenyl.

## Claims

1. Ink ribbons comprising one or more compounds of the class
of the phthalocyanines of the formula Ia 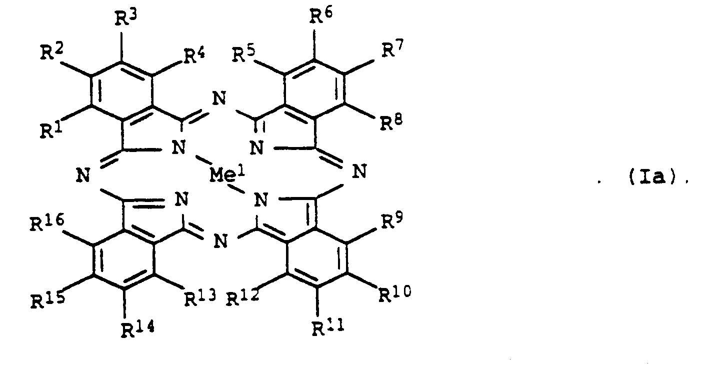 where
Me¹ is twice hydrogen, twice lithium, magnesium, tin, zinc, copper, manganese, nickel, VO, TiO, AlCl or InCl,
at least 4 of R¹ to R¹⁶ are each independently of the others a radical of the formula W-X¹, where W is a chemical bond, oxygen, sulfur, imino, C₁-C₄-alkylimino or phenylimino and X¹ is C₁-C₂₀-alkyl with or without interruption by from 1 to 4 oxygen atoms in ether function and with or without phenyl substitution, C₅-C₇-cycloalkyl or substituted or unsubstituted phenyl, and
optionally the remaining radicals R¹ to R¹⁶ are each hydrogen, halogen, hydroxysulfonyl or C₁-C₄-dialkylsulfamoyl,
of the phthalocyanines of the formula Ib 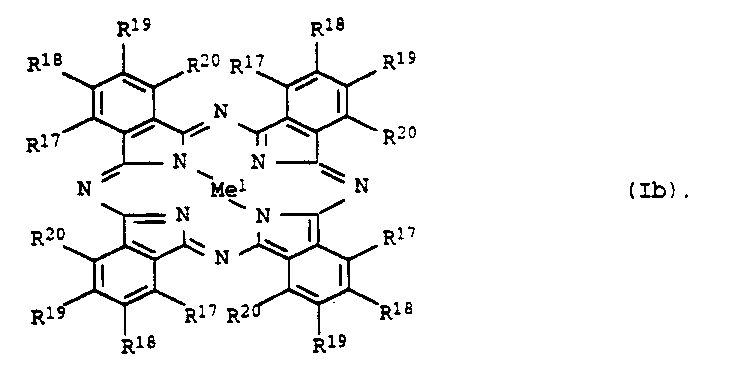 where
R¹⁷ and R¹⁸ or R¹⁸ and R¹⁹ or R¹⁹ and R²⁰ each join to form a radical of the formula X²-C₂H₄-X³, where one of the two radicals X² and X³ is oxygen and the other is imino or C₁-C₄-alkylimino, and
R¹⁹ and R²⁰ or R¹⁷ and R²⁰ or R¹⁷ and R¹⁸ are each independently of the other hydrogen or halogen, and
Me¹ is as defined above,
of the naphthalocyanines of the formula II 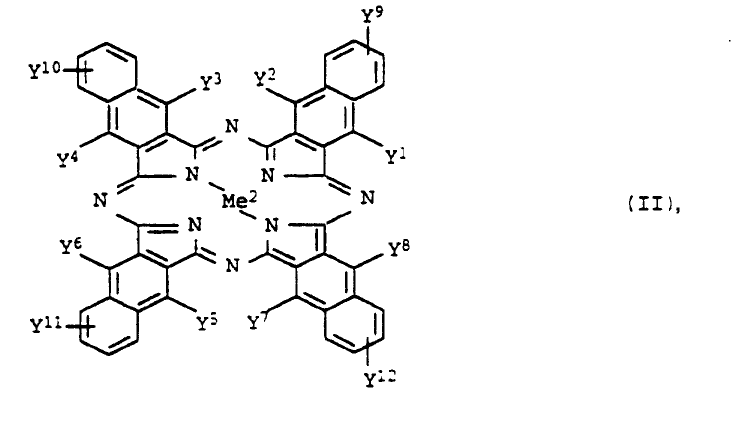 where
Me² is twice hydrogen, twice lithium, magnesium, zinc, copper, manganese, nickel, VO, TiO, AlCl or InCl,
Y¹, Y², Y³, Y⁴, Y⁵, Y⁶, Y⁷ and Y⁸ are each independently of the others hydrogen, hydroxyl or a radical of the formula W-X⁴, where W is a chemical bond, oxygen, sulfur, imino, C₁-C₄-alkylimino or phenylimino and X⁴ is C₁-C₂₀-alkyl with or without interruption by from 1 to 4 oxygen atoms in ether function and with or without phenyl substitution, C₅-C₇-cycloalkyl or C₃-C₂₀-alkenyl, and
Y⁹, Y¹⁰, Y¹¹ and Y¹² are each independently of the others hydrogen, C₁-C₂₀-alkyl or C₁-C₂₀-alkoxy, the alkyl groups each being with or without interruption by from 1 to 4 oxygen atoms in ether function, halogen, hydroxysulfonyl or C₁-C₄-dialkylsulfamoyl,
of the nickel-dithiolene complexes of the formula III 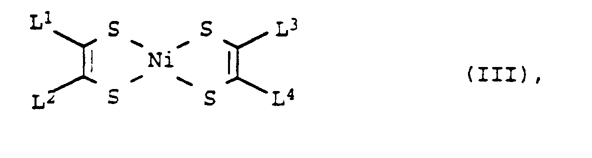 where
L¹, L², L³ and L⁴ are each independently of the others C₁-C₂₀-alkyl, with or without interruption by from 1 to 4 oxygen atoms in ether function, phenyl, C₁-C₂₀-alkylphenyl, C₁-C₂₀-alkoxyphenyl, the alkyl groups each being with or without interruption by from 1 to 4 oxygen atoms in ether function, or L¹ and L² and/or L³ and L⁴ each join to form the radical of the formula 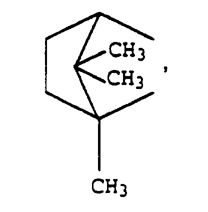 of the methine dyes of the formula IV 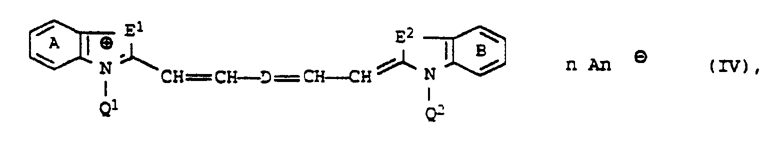 where the rings A and B are each independently of the other with or without benzofusion and with or without substitution,
E¹ and E² are each independently of the other oxygen, sulfur, imino or a radical of the formula
-C(CH₃)₂- or -CH=CH-,
D is a radical of the formula
―CE³= or ―CH=CE³―CH= , 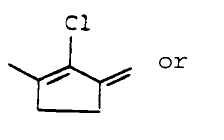 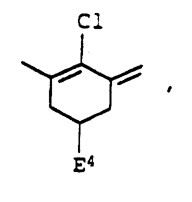
where E³ is hydrogen, C₁-C₆-alkyl, chlorine or bromine and E⁴ is hydrogen or C₁-C₆-alkyl,
Q¹ and Q² are each independently of the other phenyl, C₅-C₇-cycloalkyl or C₁-C₁₂-alkyl with or without interruption by from 1 to 3 oxygen atoms in ether function and with or without substitution by hydroxyl, chlorine, bromine, carboxyl, C₁-C₄-alkoxycarbonyl, acryloyloxy, methacryloyloxy, hydroxysulfonyl, C₁-C₇-alkanoylamino, C₁-C₆-alkylcarbamoyl, C₁-C₆-alkylcarbamoyloxy or a radical of the formula G^{⊕}(K)₃, where G is nitrogen or phosphorus and K is phenyl, C₅-C₇-cycloalkyl or C₁-C₁₂-alkyl,
An ^{⊖} is the equivalent of an anion, and
n is 1, 2 or 3,
or of the azulenesquaric acid dyes of the formula V 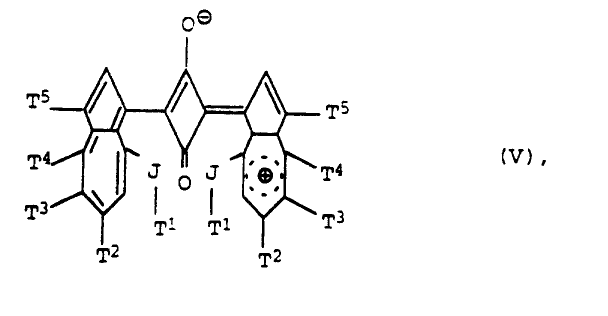 where
J is C₁-C₁₂-alkylene,
T¹ is hydrogen, halogen, amino, hydroxyl, C₁-C₁₂-alkoxy, phenyl, substituted phenyl, carboxyl, C₁-C₁₂-alkoxycarbonyl, cyano or a radical of the formula -NT⁷-CO-T⁶, -CO-NT⁶T⁷ or O-CO-NT⁶T⁷, where T⁶ and T⁷ are each independently of the other hydrogen, C₁-C₁₂-alkyl, C₅-C₇-cycloalkyl, phenyl, 2,2,6,6-tetramethylpiperidin-4-yl or cyclohexylaminocarbonyl, and
T², T³, T⁴ and T⁵ are each independently of the others hydrogen or C₁-C₁₂-alkyl with or without halogen, amino, C₁-C₁₂-alkoxy, phenyl, substituted phenyl, carboxyl, C₁-C₁₂-alkoxycarbonyl or cyano substitution,
with the proviso that, if T⁵ is hydrogen, it is also possible for the ring positions of the substituents J-T¹ and T⁴ to be interchanged within an azulene ring for one or both azulene rings,
which each have their absorption maximum within the range from 700 to 1200 nm.

2. Ink ribbons as claimed in claim 1, comprising one or more compounds of the class of the naphthalocyanines or of the nickel-dithiolene complexes.

3. Ink ribbons as claimed in claim 1, comprising one or more compounds mentioned in claim 1 and also, as solvent, at least one product selected from the group consisting of olein, C₄-C₁₃-dialkyl phthalates, C₁-C₃₀-chloroalkanes, C₁-C₂₀-diphenylalkanes, C₁-C₁₀-dialkylnaphthalenes and partially hydrogenated terphenyl.

## Revendications

1. Rubans encreurs contenant un ou plusieurs composés appartenant à la classe
des phtalocyanines de formule Ia 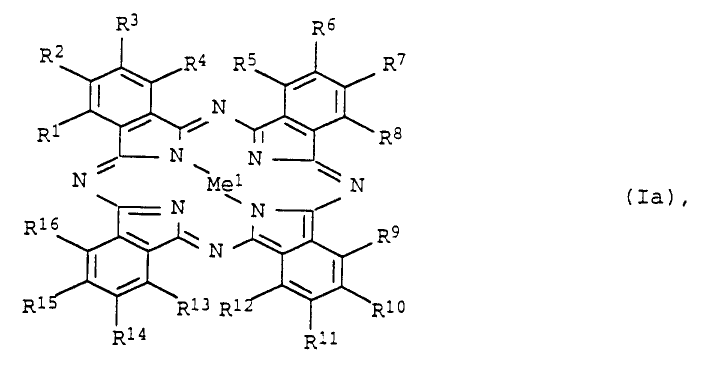 dans laquelle
Me¹ représente deux fois un atome d'hydrogène, deux fois un atome de lithium, du magnésium, de l'étain, du zinc, du cuivre, du manganèse, du nickel, VO, TiO, AlCl ou InCl,
au moins 4 des radicaux R¹ à R¹⁶ représentent chacun indépendamment des autres un résidu de formule W-X¹, où W est une liaison chimique, un atome d'oxygène, un atome de soufre, un groupe imino, alkylimino en C₁-C₄ ou phénylimino, et X¹ est un groupe alkyle en C₁-C₂₀ qui est éventuellement interrompu par 1 à 4 atomes d'oxygène en fonction éther et qui peut être substitué par des substituants phényle; cycloalkyle en C₅-C₇ ou phényle éventuellement substitué, et
éventuellement, les autres radicaux R¹ à R¹⁶ sont chacun un atome d'hydrogène, un atome d'halogène, un groupe hydroxysulfonyle ou dialkylsulfamoyle en C₁-C₄,
des phtalocyanines de formule Ib 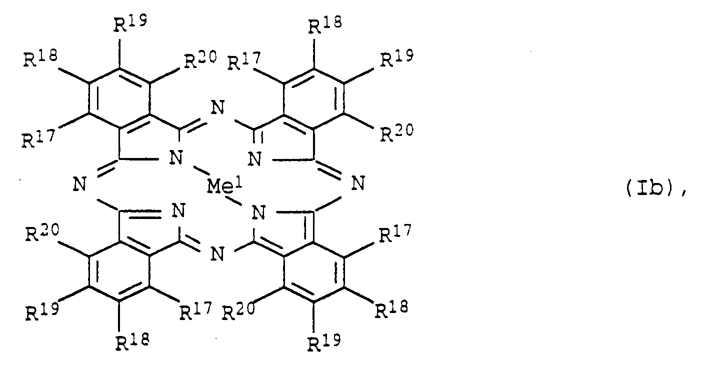 dans laquelle
les couples R¹⁷ et R¹⁸, ou R¹⁸ et R¹⁹, ou R¹⁹ et R²⁰, forment chacun un résidu de formule X²-C₂H₄-X³, où l'un des deux radicaux X² et X³ est un atome d'oxygène et l'autre est un groupe imino ou alkylimino en C₁-C₄, et
R¹⁹ et R²⁰, ou R¹⁷ et R²⁰, ou R¹⁷ et R¹⁸, représentent chacun indépendamment des autres un atome d'hydrogène ou d'halogène, et
Me¹ a les significations données ci-dessus
des naphtalocyanines de formule II 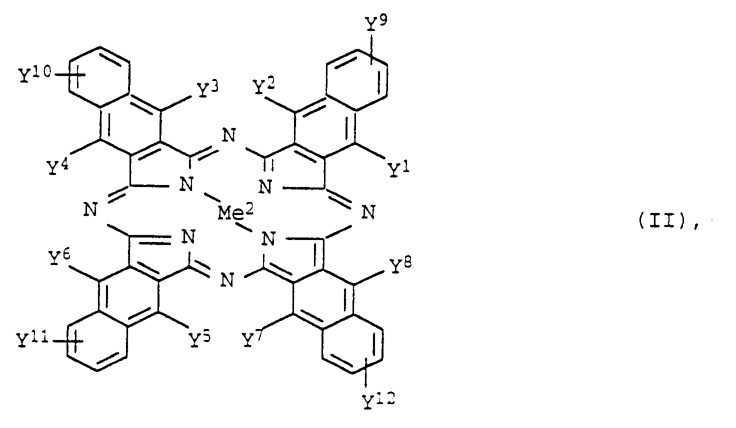 dans laquelle
Me² est deux fois un atome d'hydrogène, deux fois un atome de lithium, du magnésium, du zinc, du cuivre, du manganèse, du nickel, VO, TiO, AlC ou InCl,
Y¹, Y², Y³, Y⁴, Y⁵, Y⁶, Y⁷ et Y⁸ sont chacun indépendamment des autres un atome d'hydrogène, un groupe hydroxy ou un résidu de formule W-X⁴, où W est une liaison chimique, un atome d'oxygène, un atome de soufre, un groupe imino, alkylimino en C₁-C₄ ou phénylimino, et X⁴ est un groupe alkyle en C₁-C₂₀, qui est éventuellement interrompu par 1 à 4 atomes d'oxygène en fonction éther et peut être substitué par des substituants phényle ; cycloalkyle en C₅-C₇ ou alcényle en C₃-C₂₀, et
Y⁹, Y¹⁰, Y¹¹ et Y¹² sont chacun indépendamment des autres un atome d'hydrogène, un groupe alkyle en C₁-C₂₀ ou alcoxy en C₁-C₂₀, les groupes alkyle pouvant être chacun interrompu par 1 à 4 atomes d'oxygène en fonction éther ; halogéno, hydroxysulfonyle ou di(alkyle en C₁-C₄)sulfamoyle,
des complexes nickel-dithiol de formule III 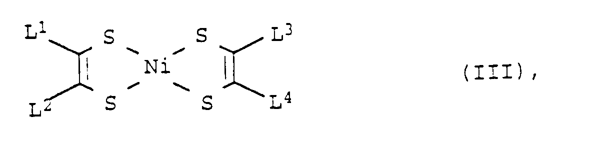 dans laquelle
L¹, L², L³ et L⁴ sont chacun indépendamment des autres un groupe alkyle en C₁-C₂₀, qui peut éventuellement être interrompu par 1 à 4 atomes d'oxygène en fonction éther ; phényle, (alkyle en C₁-C₂₀)phényle, (alcoxy en C₁-C₂₀)phényle, les groupes alkyle pouvant chacun être interrompu par 1 à 4 atomes d'oxygène en fonction éther ; ou bien L¹ et L² et/ou L³ et L⁴ forment ensemble le résidu de formule 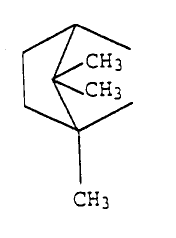 des colorants de méthine de formule IV 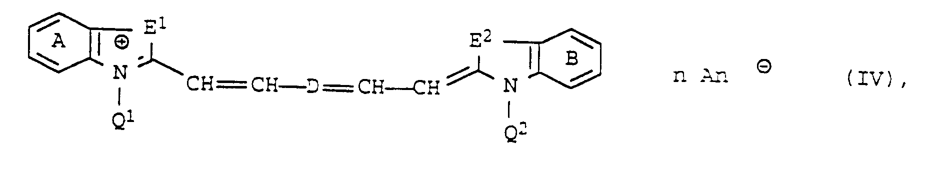 dans laquelle les noyaux A et B sont chacun indépendamment de l'autre éventuellement benzo-condensés et peuvent être substitués,
E¹ et E² sont chacun indépendamment de l'autre un atome d'oxygène, un atome de soufre, un groupe imino ou un résidu de formule
-C(CH₃)₂- ou -CH=CH-
D est un résidu de formule
-CE³= ou -CH=CE³-CH= 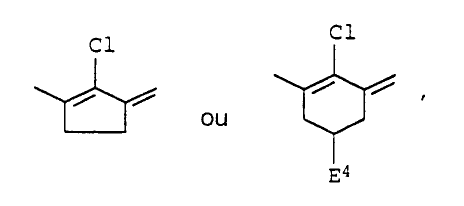
où E³ est un atome d'hydrogène ou un groupe alkyle en C₁-C₆, chloro ou bromo, et E⁴ est un atome d'hydrogène ou un groupe alkyle en C₁-C₆,
Q¹ et Q² sont chacun indépendamment de l'autre un groupe phényle, cycloalkyle en C₅-C₇ ou alkyle en C₁-C₁₂, qui peut être interrompu par 1 à 3 atomes d'oxygène en fonction éther et est éventuellement substitué par des substituants hydroxy, chloro, bromo, carboxyle, (alcoxy en C₁-C₄)carbonyle, acryloyloxy, méthacryloyloxy, hydroxysulfonyle, alcanoylamino en C₁-C₇, (alkyle en C₁-C₆)carbamoyle, (alkyle en C₁-C₆)carbamoyloxy ou par un résidu de formule G⁺(K)₃ dans laquelle G est un atome d'azote ou de phosphore et K représente un groupe phényle, cycloalkyle en C₅-C₇ ou alkyle en C₁-C₁₂,
An⁻ est l'équivalent d'un anion, et
n vaut 1, 2 ou 3,
ou des colorants d'acide azulènequadratique de formule V 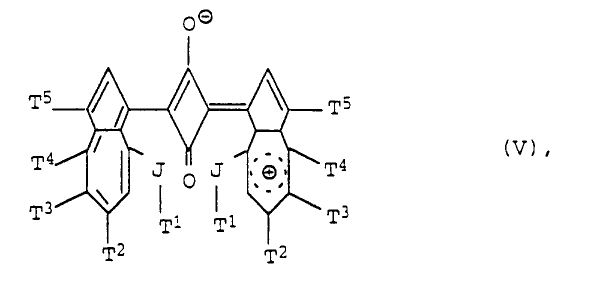 dans laquelle
J est un groupe alkylène en C₁-C₁₂,
T¹ est un atome d'hydrogène ou d'halogène, un groupe amino, hydroxy, alcoxy en C₁-C₁₂, phényle, phényle substitué, carboxyle, (alcoxy en C₁-C₁₂)-carbonyle, cyano, ou encore un résidu de formule -NT⁷-CO-T⁶, -CO-NT⁶T⁷ ou O-CO-NT⁶T⁷, où T⁶ et T⁷ représentent chacun indépendamment de l'autre un atome d'hydrogène, un groupe alkyle en C₁-C₁₂, cycloalkyle en C₅-C₇, phényle, 2,2,6,6-tétraméthylpipéridine-4-yle ou cyclohexylaminocarbonyle, et
T², T³, T⁴ et T⁵ sont chacun indépendamment des autres un atome d'hydrogène ou un groupe alkyle en C₁-C₁₂, qui est éventuellement substitué par des substituants halogéno, amino, alcoxy en C₁-C₁₂, phényle, phényle substitué, carboxyle, (alcoxy en C₁-C₁₂)carbonyle ou cyano,
à la condition que, quand T⁵ est un atome d'hydrogène, les positions des substituants J-T¹ et T⁴ à l'intérieur d'un noyau azulène puissent aussi être remplacées l'une par l'autre sur l'un des noyaux azulène ou sur les deux,
qui chacun présentent leur maximum d'absorption dans l'intervalle de 700 à 1200 nm.

2. Rubans encreurs selon la revendication 1, contenant un ou plusieurs composés de la classe des naphtalocyanines ou des complexes nickel-dithiol.

3. Rubans encreurs selon la revendication 1, contenant un ou plusieurs des composés mentionnés dans la revendication 1 et aussi, en tant que solvant, au moins un produit choisi dans le groupe constitué de l'oléine, des phtalates de di(alkyle en C₄-C₁₃), des chloralcanes en C₁-C₃₀, des diphényl(alcanes en C₁-C₂₀), des di(alkyle en C₁-C₁₀)naphtalènes et du terphényle partiellement hydrogéné.
